# EUROPÄISCHE PATENTSCHRIFT

(11) **EP 1 685 540 B1**
(45) Veröffentlichungstag und Bekanntmachung des Hinweises auf die Patenterteilung: **01.09.2010**
(21) Anmeldenummer: 04797233.6
(22) Anmeldetag: 08.11.2004
(51) Int. Cl.: G07C 5/08, B60R 11/04

(54) **EINRICHTUNG ZUR AUFZEICHNUNG VON FAHR- UND/ODER VERKEHRSSITUATIONEN VON FAHRZEUGEN UND VERFAHREN ZUR AUSWERTUNG DIESER AUFZEICHNUNGEN**
DEVICE FOR RECORDING DRIVING AND/OR TRAFFIC CONDITIONS AND METHOD FOR EVALUATING SAID RECORDED DATA
DISPOSITIF D'ENREGISTREMENT DE SITUATIONS DE CONDUITE ET/OU DE CIRCULATION DE VEHICULES ET PROCEDE D'EVALUATION DE CES ENREGISTREMENTS

(30) Priorität: 11.11.2003 CH 193603
(43) Veröffentlichungstag der Anmeldung: 02.08.2006
(73) Patentinhaber: TECHNIKUS AG, 9490 Vaduz (LI)
(72) Erfinder: SOURLIER, David, 9633 Hemberg (CH)
(74) Vertreter: Felber, Josef
(86) Internationale Anmeldenummer: PCT/CH2004/000676
(87) Internationale Veröffentlichungsnummer: WO 2005/045768

(56) Entgegenhaltungen:
- WO-A-88/09023
- WO-A-03/023557
- DE-A- 4 235 046
- DE-A- 19 952 832

## Beschreibung

Die vorliegende Erfindung betrifft eine Einrichtung zur Aufzeichnung von Fahr- und/oder Verkehrssituationen von Fahrzeugen. Weiter bezieht sie sich auf ein Verfahren zur Auswertung dieser Aufzeichnungen.

Es sind verschiedene Einrichtungen zur Aufzeichnung von Fahrsituationen von Fahrzeugen bekannt. Durch Sensoren werden beispielsweise die Geschwindigkeit oder das Betätigen der Bremse erfasst und in einem Kurzzeitspeicher registriert. Auf diese Weise lassen sich im Nachhinein die Daten im kurzen Zeitraum vor einem Unfall abrufen und eventuell den Unfallhergang rekonstruieren. Ergänzend zu den genannten Sensoren, ist es ebenfalls bekannt, Bild und Ton aufzuzeichnen. Neben einem Mikrofon, werden am Fahrzeug hierzu Videokameras installiert, die das Geschehen vor oder auch hinter dem Fahrzeug erfassen. Dies bringt den Vorteil mit sich, dass - zusätzlich zum Verhalten des eigenen Fahrzeugs - die Verkehrssituation aufgezeichnet wird. Insbesondere sind im Idealfall das Verhalten und die Zulassungsnummern anderer Fahrzeuge erkennbar.

Trotz der Anzahl der zu installierenden Geräte, lässt sich der Unfallhergang im Streitfall jedoch häufig nur unzureichend rekonstruieren, da die gewonnenen Daten den genauen Ablauf der Ereignisse und deren räumliche und zeitliche Zuordnung zur damaligen Verkehrssituation nur unzuverlässig wiedergeben.

Aus der DE 199 52 832 A ist ein videogestütztes Unfall- und Verkehrsdokumentationssystem bekannt geworden, bei welchem mindestens zwei Kameras versetzt zueinander mit überlappendem Bildbereich vorgesehen sind und bei welchem eine Auswertung vorgesehen ist, die aus den aufgezeichneten Bilddaten des überlappenden Bildbereiches mittels Stereoskopie Bild-Punkte auf beteiligten Fahrzeugen und Verkehrsteilnehmern rekonstruiert. Im Vergleich zu einem photogrammetrischen Verfahren ist ein solches stereoskopisches Verfahren viel weniger genau und ausserdem schlecht automatisierbar. Um eine ganze Szene oder sogar deren zeitliche Entwicklung einigermassen detailgetreu in 3D darzustellen, müssten mit dem aufwendigen stereoskopischen Verfahren Tausende von Punkte trianguliert werden, weswegen es nur für qualitative Rekonstruktionen eines Ereignisses, nicht aber für quantitative Rekonstruktionen einsetzbar ist.

In DE 42 35 046 A ist eine Methode zur automatischen, stereographischen Fotoregistration von Autounfällen offenbart, wobei Kameras jeweils paarweise eingesetzt werden, um räumliche Bilder vom Unfallort zu erhalten, wodurch unter anderem Entfernungen am Unfallort festgehalten werden. Eine solche stationäre stereoskopische Aufnahme am Unfallort kann zwar die Folgen des Unfalls erfassen, nicht aber seine Ursachen und seinen dynamischen Hergang festhalten.

Auf der Grundlage dieser Erkenntnisse setzt sich die Erfindung die Aufgabe, ein Verfahren zu schaffen, welches gut automatisierbar ist und dennoch mit minimalen Einrichtungen am Fahrzeug eine exakt quantifizierte räumliche Zuordnung der Ereignisse im dreidimensionalen Raum vor einem Verkehrsunfall oder während einer kritischen Verkehrssituation ermöglicht. Neben der exakten aktuellen 3D-Lage aller beteiligten Fahrzeuge können auch deren genaue Geschwindigkeiten, Beschleunigungen und Rotationen in Betrag und Richtung aufgezeichnet werden.

Das erfindungsgemässe Verfahren geht aus den Patentansprüchen 1 und 2 hervor. Die erfindungsgemässe Einrichtung zur Durchführung dieses Verfahrens entspricht den kennzeichnenden Merkmalen der Patentansprüche 6 und 7. Weitere vorteilhafte Ausbildungen dieses Verfahrens und dieser Einrichtung sind aus den abhängigen Patentansprüchen ersichtlich.

Dieses Verfahren, das mit Photogrammetrie und kalibrierten Bildern arbeitet, ist sehr genau und sehr gut automatisierbar, besonders mit dem Konzept, wonach einige wenige, gut triangulierbare Referenzpunkte mit bekannten Fahrzeugdaten aus einer Datenbank verknüpft werden. Damit kann mit wenig Aufwand eine grosse Detailtreue erreicht werden.

Nachfolgend wird ein Ausführungsbeispiel der Erfindung anhand einer Zeichnung näher beschrieben.
- Fig. 1: zeigt ein Fahrzeug in der Draufsicht;
- Fig. 2: zeigt schematisch den am Fahrzeug anzubringenden, der Erfassung der Daten dienenden Teil der Einrichtung;
- Fig.3: zeigt die Ansicht einer Verkehrssituation mit zwei Fahrzeugen.

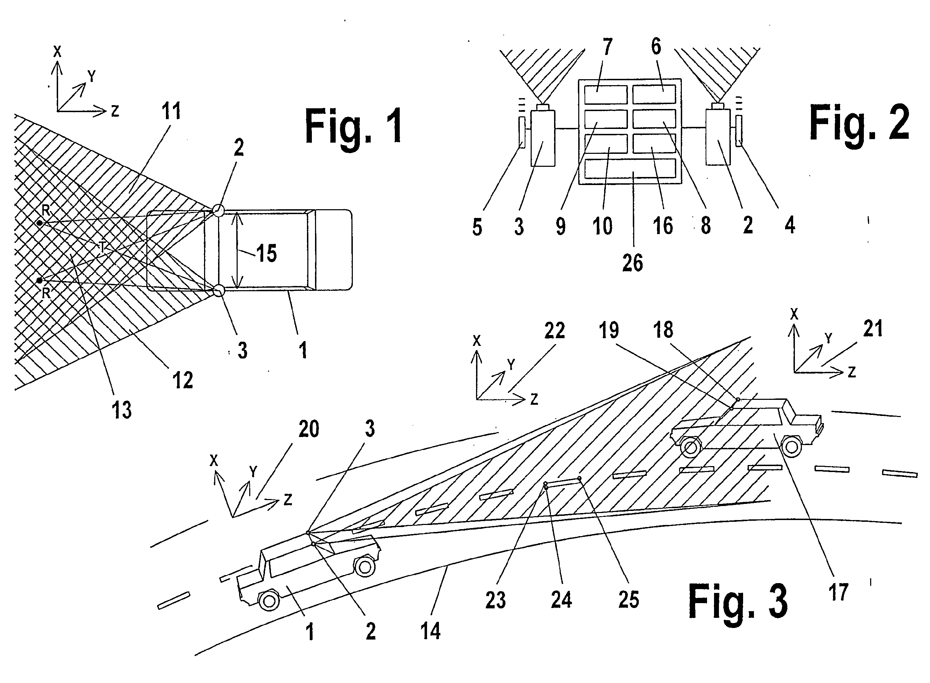

Ein Personenwagen 1 ist gemäss den Fig. 1 und 2 mit zwei schematisch angedeuteten, der Bildaufzeichnung dienende Erfassungskameras 2 und 3 ausgerüstet. Vorzugsweise handelt es sich dabei um digitale Kameras, denen je ein Mikrofon 4 und 5 zugeordnet ist. Gekoppelt an diese Erfassungskameras 2 und 3 ist mindestens ein Speicher. Im vorliegenden Fall ist ein nicht-flüchtiger Speicher 6 oder 7 in der Art eines Ringpuffers vorhanden. Es kann auch jedes der beiden Erfassungskameras 2 und 3 mit einem separaten Speicher 6 und 7 versehen sein. Auf den Zweck der Ringpuffer wird später eingegangen. Darüber hinaus ist mindestens ein weiterer, nichtflüchtiger Speicher 8 und 9 vorgesehen, der an den als Ringpuffer dienenden Speicher gekoppelt ist. Dieser weitere Speicher kann die gleiche Menge an Daten bzw. Bildern speichern wie der erste. Die Erfassungskameras 2 und 3 nehmen in schneller Folge Bilder auf, beispielsweise 25x pro Sekunde. Sie sind gegenseitig synchronisiert. Vorteilhaft erfolgt auch eine Synchronisation zur genauen Zeit. Dies kann mittels einer Funkuhr 10 erfolgen. Das bedeutet, dass der genaue Zeitpunkt jedes Bildes festgehalten wird.

Die beiden Erfassungskameras 2 und 3 sind so ausgerichtet, dass der Bereich vor dem Fahrzeug 1 erfasst wird. Hierbei überschneiden sich deren Erfassungsbereiche 11 und 12 in einem Schnittbereich 13, der zumindest die Fahrbahn 14 vor dem Fahrzeug 1, vorzugsweise jedoch auch je einen Streifen links und rechts davon umfasst. Die vorliegende schematische Zeichnung dient nur der Erklärung. Sie legt in bezug auf die vorliegende Erfindung weder die Lage noch die Ausrichtung der Erfassungskameras 2 und 3 fest. Es ist indessen von Vorteil, wenn der gegenseitige Abstand 15 der beiden Erfassungskameras 2 und 3 möglichst gross gewählt wird.

Die Lage und Ausrichtung der beiden Erfassungskameras 2 und 3 am Fahrzeug 1, insbesondere auch deren Abstand 15 voneinander, ist in jedem Fall zu ermitteln und vorzugsweise ebenfalls in einem Speicher 16 festzuhalten. Die Kenntnis der Lage der Erfassungskameras 2 und 3 zueinander und deren Lage am Fahrzeug selbst, erlaubt es mit Methoden der Bildverarbeitung und der Photogrammetrie, die exakte Lage von einem oder mehreren Referenzpunkten zu ermitteln. Diese Methoden sind an sich bekannt. Im vorliegenden Fall können Referenzpunkte R, die auf mindestens zwei synchronisiert aufgenommenen Bildern von je einer Erfassungskamera 2 und 3 sichtbar sind, genau trianguliert werden, wie mit T angedeutet, so dass deren dreidimensionale Koordinaten X, Y und Z, innerhalb eines Koordinatensystems exakt bestimmbar sind.

Es sei hier eingefügt, dass es im Rahmen der Erfindung liegt, auch mehr als zwei Erfassungskameras 2 und 3 vorzusehen. Insbesondere durch die Verwendung einer Gruppe von drei Erfassungskameras kann die Messgenauigkeit noch gesteigert werden. Analog der hier in Fahrtrichtung wirkenden Erfassungskameras, können zusätzlich auch solche nach hinten angeordnet werden. Theoretisch sogar solche zu beiden Fahrzeugseiten.

Aus Fig. 3 ist die praktische Umsetzung der vorgehend beschriebenen Erkenntnisse in einer Verkehrssituation mit zwei sich einander nähernden Fahrzeugen 1 und 17 ersichtlich. Dargestellt ist die Erfassung der Verkehrssituation durch die bei den Erfassungskameras 2 und 3 des ersten Fahrzeugs 1. Sind beide Fahrzeuge 1 und 17 damit ausgerüstet, erfolgt diese Erfassung zusätzlich auch am Gegenfahrzeug und kann zur Korrektur beigezogen werden.

Die am zweiten Fahrzeug 17 der Triangulation als Referenzpunkte dienenden Erkennungspunkte 18 und 19 sind zum Zweck der automatischen Auswertung vorzugsweise eigens angeordnet. Es kann sich um weisse Kreise oder Punkte handeln. Sie können auch leuchtend ausgebildet werden, sei es als passiv leuchtende Elemente, beispielsweise Reflexionsmarken, oder auch als aktiv leuchtende Elemente, beispielsweise Leuchtdioden. Die Elemente können aber auch für das menschliche Auge unsichtbar leuchten, beispielsweise mittels Infrarotlicht. Die Erkennungspunkte 18 und 19 sollten in möglichst grossem Abstand voneinander angeordnet sein. Denkbar ist es aber auch, diese Erkennungspunkte 18 und 19 an den Ecken eines normierten Nummernschildes oder eines Nummernschildrahmens anzubringen, eventuell in normierter Lage. Letztere Lösungen würden die Aus- bzw. Nachrüstung von älteren Fahrzeugen vereinfachen.

Es sei hier ausdrücklich darauf hingewiesen, dass der Einsatz der vorliegenden Einrichtung nicht nur auf Personenwagen beschränkt ist. Jedes beliebige Fahrzeug kann damit ausgerüstet werden, auch Zweiradfahrzeuge. Letztlich ist sogar die Montage an einem Fahrrad denkbar, denn die Kosten und das Gewicht sind verhältnismässig gering. Darüber hinaus ist die Einrichtung ohne weiteres auch für Schienenfahrzeuge verwendbar, von der Strassenbahn bis zur Eisenbahn. Ebenso können Wasserfahrzeuge damit ausgestattet werden, beispielsweise in der Flussschiffahrt. Denkbar ist auch der Einsatz an Luftfahrzeugen. So besteht beispielsweise bei Segelflugzeugen in engen Thermikgebieten ebenfalls ein Kollisionsrisiko.

Solange - wie dies bei Strassenfahrzeugen der Fall ist - die Fläche im Raum bekannt ist, auf der sich das Fahrzeug 1 und/oder 17 bewegt hat, genügen zwei Erkennungspunkte 18 und 19 zur räumlichen Rekonstruktion. Falls diese Fläche nicht bekannt ist oder sich das Fahrzeug frei im Raum bewegt hat - beispielsweise im Fall eines Luft- oder Wasserfahrzeugs - so sind mindestens drei Erkennungspunkte 18 und 19 notwendig. Bei Bewegung längs einer Raumlinie - beispielsweise bei Schienenfahrzeugen - genügt auch ein Erkennungspunkt 18 oder 19.

Die Verwendung von mehr als der minimal notwendigen Anzahl Erkennungspunkte 18 und 19 steigert die Messgenauigkeit. So können auch bei Strassenfahrzeugen drei Erkennungspunkte vorgesehen werden. Diese werden vorzugsweise nach dem Delauny-Kriterium, d.h. möglichst nahe bei einem gleichseitigen Dreieck, und mit möglichst grossen Abständen angeordnet. Je ein Erkennungspunkt könnte an den Scheinwerfern bzw. den Rückleuchten angebracht werden. Ein dritter Erkennungspunkt könnte beispielsweise an der Vorderseite des Innenrückspiegels, bzw. im Bereich einer häufig vorhandenen dritten Bremsleuchte in der Heckscheibe angeordnet sein.

Die verschiedenen Erkennungspunkte können auch kodiert sein, sei es durch unterschiedliche Form und/oder Farbe. Bei aktiv leuchtenden Erkennungspunkten kann eine Kodierung durch unterschiedliche Blink-Frequenzen oder -Rhythmen erfolgen. Dies erleichtert deren automatische Erkennung und Zuordnung mittels Bildverarbeitung.

Selbstverständlich ist es jedoch auch möglich, am Fahrzeug ohnehin vorhandene Elemente als Referenz- bzw. als Erkennungspunkte 18 und 19 zu verwenden. Dies könnten die Scheinwerfer und die Rückleuchten, die Nummernschilder oder auch Elemente des Fahrzeugdesigns, wie Kanten und dergleichen sein.

Ist die Lage der Erfassungskameras 2 und 3 im Koordinatensystem 20 des ersten Fahrzeugs 1 und die Lage der Erkennungspunkte 18 und 19 am Koordinatensystem 21 des zweiten Fahrzeugs 17 bekannt und gespeichert, so kann - mittels einer entsprechenden Software - die Lage und Bewegung der beiden Fahrzeuge 1 und 17 vor einem Unfall errechnet und dargestellt werden.

Durch die dreidimensionale, zeitlich getaktete Erfassung, sind neben der aktuellen räumlichen Lage, auch die momentane Geschwindigkeit, die Geschwindigkeitsrichtung, Richtungsänderungen, Beschleunigungs- und Bremsmanöver sowie Eigenrotationen der einzelnen Fahrzeuge um ihren Schwerpunkt sichtbar und massstäblich messbar. Insbesondere ist dadurch erkennbar, wie die Fahrzeuge vor dem Unfall unterwegs waren, wann ein Bremsvorgang eingeleitet wurde und wie lange es bis zum Stillstand dauerte. Und dies ohne, dass es dazu Sensoren an den Lenkrädern sowie an den Brems- und Gaspedalen bedürfte. Nebenbei ergeben sich durch die Bildaufzeichnung die damit ohnehin verbundenen Erkenntnisse über das im Bild aufgenommene Fahrzeug, wie Lichtführung oder Blinkerbetätigung und nicht zuletzt über Zulassungsnummer und Lenker.

Die der Datenspeicherung dienenden Teile der Einrichtung sind gegen Erschütterungen und gegen unerwünschte Manipulation zu sichern. Hierzu kann ein plombierter, stoss-, druck- und feuerresistenter Behälter dienen. Dieser Behälter kann auch mit einer Ortungsmöglichkeit versehen sein, die dessen Auffinden nach einem Unfall erleichtert. Beispielsweise kann dies eine Sendeeinrichtung, eine magnetisch passive Diode oder eine Blinkeinrichtung sein.

Die Auswertung der Daten kann nach einem Unfall oder nach einer aufgezeichneten, kritischen Verkehrssituation extern erfolgen. Die dazu erforderliche Software kann einem Verkehrsexperten zur Verfügung gestellt werden. Die Auswertung kann automatisch, halbautomatisch oder auch manuell erfolgen. Die beschriebene Einrichtung erlaubt jedenfalls eine zeitsparende automatische Auswertung. Dabei kann beispielsweise auch das Verhalten von einem Dritten, aus den Aufzeichnungen erkennbaren Fahrzeug überprüft werden.

Bei der Auswertung können auch die Masse und Konturen der aufgenommenen, beteiligten Fahrzeugtypen berücksichtigt werden. Damit und durch die zuvor beschriebene Erfassung der relativen Bewegung der Koordinatensysteme 20 und 21 von zwei oder mehr Fahrzeugen 1 und 17 gegeneinander und von mindestens einem Koordinatensystem 20 eines Fahrzeugs 1 relativ zur Umgebung, ist es möglich, die relative Lage und Bewegung von beliebig ausgewählten Punkten auf den Fahrzeugen oder der Umgebung zu rekonstruieren. Zur Berücksichtigung der beteiligten Fahrzeugtypen, kann die Software eine entsprechende Datenbank aufweisen oder von einer derartigen Datenbank die erforderlichen Daten abrufen. Ist der Fahrzeugtyp zu diesem Zeitpunkt noch nicht erfasst gewesen, so kann dies ohne weiteres nachgeholt werden.

Zum Einbezug der Umgebung des Unfallortes, ist die Software so auszulegen, dass auch das Koordinatensystem 22 der Umgebung einfliessen kann. Das Bild der Umgebung kann entweder den vorhandenen Bildaufzeichnungen entnommen werden oder es wird nachträglich noch mindestens ein Bild der Umgebung aufgenommen. Zur räumlichen Rekonstruktion sind mindestens zwei Bilder aus unterschiedlichen Standorten und Blickwinkeln erforderlich. Auch den ruhenden Umgebungsbildern sind Referenz- bzw. Erkennungspunkte 23, 24 und 25 zuzuordnen. Es kann sich dabei beispielsweise um ohnehin vorhandene Erkennungspunkte 23, 24 und 25 am Mittelstreifen der Fahrbahn oder an einer Leitplanke oder um die Leuchtpunkte an Strassenpfosten handeln. Dadurch kann die gegenseitige Lage und Bewegung der Fahrzeuge 1 und 17 korrekt in Beziehung zum ruhenden Koordinatensystem 22 der Umgebung gebracht werden. Der Hergang des Unfalls oder der kritischen Verkehrssituation lässt sich in das Umgebungsbild projizieren und somit ein zuverlässiges, virtuelles, räumliches Bild aus Sicht eines aussenstehenden Betrachters errechnen und darstellen, ähnlich der schematischen Darstellung nach Fig. 3. Dabei handelt es sich jedoch nicht nur um ein statisches Bild, sondern um eine Bildfolge, d.h. um einen Film über das Geschehen von einem Zeitpunkt vor dem Unfall bis zum Unfall selbst. Der Standpunkt des Betrachters kann beliebig verändert werden, ähnlich einem Hologramm. Die genaue Lage und Bewegung jedes einzelnen Punktes kann nach Bedarf abgerufen werden. Dies alles erleichtert im Streitfall die Klärung der Schuldfrage erheblich.

Es versteht sich von selbst, dass aus den Aufzeichnungen ein Unfallhergang auch dann rekonstruierbar ist, wenn kein zweites Fahrzeug 17 beteiligt ist. Das Verhalten des einen Fahrzeugs 1 ist in jedem Fall in Relation zu Referenzpunkten R oder Erkennungspunkten 23, 24 und 25 der Umgebung errechenbar.

In den Speichern 8 und 9 können Informationen über eine kritische Verkehrssituation festgehalten werden, beispielsweise Beinaheunfälle, die eventuell zu Folgen für Dritte Verkehrsteilnehmer geführt haben, während dem die laufend überschreibende Speicherung in die als Ringpuffer ausgebildeten Speicher 6 und 7 nicht gestoppt wird. Diese Bild- und Toninformationen können bei Bedarf ausgewertet werden, u.a. zur Ermittlung der Zulassungsnummern der beteiligten Fahrzeuge.

Die vorgenannte Zwischenspeicherung kann entweder elektronisch ausgelöst werden oder manuell durch den Fahrer, beispielsweise durch eine Taste am Lenkrad. Eine elektronische Auslösung könnte durch Anhalten des Fahrzeugs 1 erfolgen, die z.B. durch gleichbleibende Bildinformationen detektierbar ist, oder durch Abstellen der Zündung oder durch nicht mehr Betätigen des Gaspedals während einiger Sekunden. Es ist aber auch jedes andere detektivierbare Signal denkbar.

Als fahrzeugexternes Zubehör können, Kalibriereinrichtungen vorhanden sein, eventuell auch nur als Software für bereits bestehende Einrichtungen. Eine erste Kalibrierung kann der Erfassung und Berechnung der Lage der Erkennungspunkte 18 und 19 sowie allenfalls weiterer Punkte im Koordinatensystem 21 eines Fahrzeugs 17 dienen. Hierzu sind mindestens zwei stationäre Erfassungskameras erforderlich. Weiter können mittels eines stationären Satzes von photogrammetrischen Erkennungspunkten die Lage von an einem Fahrzeug 1 montierten Erfassungskameras 2 und 3 im Koordinatensystem 20 dieses Fahrzeugs 1 berechnet werden.

Die erfindungsgemässe Einrichtung zur Aufzeichnung von Fahr- und/oder Verkehrssituationen von Fahrzeugen ist relativ preisgünstig. Digitale Kameras, wie sie beispielsweise als Webcams verwendet werden, sind heutzutage preiswert erhältlich. Ebenso die als Speicher dienenden Mikrochips. Die Auswertung erfolgt ja extern und verursacht am Fahrzeug keine Kosten. Da es bei Unfällen häufig um einen hohen Sachschaden an den Fahrzeugen und möglicherweise auch um teure Folgekosten für die verletzten Personen geht, ist eine sichere Beweislage von grossen Vorteil. Sie schützt den sich korrekt verhaltenden Verkehrsteilnehmer vor ungerechtfertigten Schuldzuweisungen und Schadenersatzforderungen.

Es ist möglich, die Einrichtung auch anders als vorgehend beschrieben auszubilden. Unter anderem kann auch eine die Abläufe kontrollierende Steuerung 26 vorhanden sein.

## Patentansprüche

1. Verfahren zur Auswertung von Fahr- oder Verkehrssituationen mit mindestens zwei mit Abstand (15) voneinander an einem Fahrzeug (1) angeordneten Erfassungskameras (2,3), deren jeweilige Erfassungsbereiche (11,12) sich in einem gemeinsamen Schnittbereich (13) überlagern, ***dadurch gekennzeichnet,* dass** mit gemeinsamer Zeitsteuerung eine zeitlich synchronisierte und mit kalibrierter Anordnung der Erfassungskameras (2,3) in einem Koordinatensystem (20) eines Fahrzeugs (1) eine photogrammetrisch in Bezug auf die Lage kalibrierte Bildaufnahme erfolgt, und damit mindestens ein künstlich angebrachter oder natürlich vorhandener Referenzpunkt der Umgebung (23,24,25) oder mindestens ein Erkennungspunkt (18,19) mindestens eines zweiten Fahrzeugs (17) photogrammetrisch trianguliert wird, das heisst in seiner aktuellen zeitabhängigen Position erfasst wird, und hernach unter Berücksichtigung der Lage, das heisst der Position und Orientierung der Erfassungskamera (2,3) im Koordinatensystem (20) des Fahrzeugs (1) oder der Lage der Erkennungspunkte (18,19) im Koordinatensystem (21) des mindestens einen zweiten Fahrzeugs (17) die zeitabhängige Lage des ausgerüsteten Fahrzeugs (1) im Koordinatensystem (22) der Umgebung oder die Lage des mindestens einen zweiten Fahrzeugs (17) entweder im Koordinatensystem (22) der Umgebung oder zumindest im Koordinatensystem (20) des ersten Fahrzeugs (1) bestimmt wird.

2. Verfahren zur Auswertung von Fahr- oder Verkehrssituationen mit mindestens zwei mit Abstand (15) voneinander an einem Fahrzeug (1) angeordneten Erfassungskameras (2,3), deren jeweilige Erfassungsbereiche (11,12) sich in einem gemeinsamen Schnittbereich (13) überlagern, ***dadurch gekennzeichnet,* dass** mit gemeinsamer Zeitsteuerung eine zeitlich synchronisierte und mit kalibrierter Anordnung der Erfassungskameras (2,3) in einem Koordinatensystem (20) eines Fahrzeugs (1) eine photogrammetrisch in Bezug auf die Lage kalibrierte Bildaufnahme erfolgt, und damit mindestens ein künstlich angebrachter oder natürlich vorhandener Referenzpunkt der Umgebung (23,24,25) und mindestens ein Erkennungspunkt (18,19) mindestens eines zweiten Fahrzeugs (17) photogrammetrisch trianguliert wird, das heisst in seiner aktuellen zeitabhängigen Position erfasst wird, und hernach unter Berücksichtigung der Lage, das heisst der Position und Orientierung der Erfassungskamera (2,3) im Koordinatensystem (20) des Fahrzeugs (1) und der Lage der Erkennungspunkte (18,19) im Koordinatensystem (21) des mindestens einen zweiten Fahrzeugs (17) die zeitabhängige Lage des ausgerüsteten Fahrzeugs (1) im Koordinatensystem (22) der Umgebung und die Lage des mindestens einen zweiten Fahrzeugs (17) entweder im Koordinatensystem (22) der Umgebung oder zumindest im Koordinatensystem (20) des ersten Fahrzeugs (1) bestimmt wird.

3. Verfahren nach einem der vorangehenden Ansprüche, ***dadurch gekennzeichnet,* dass** unter Berücksichtigung der Lage der Erfassungskameras (2,3) im Koordinatensystem (20) und/oder unter Berücksichtigung der Lage mindestens eines künstlichen oder natürlichen Erkennungspunktes (18,19) im Koordinatensystem (21) die Daten des jeweiligen Fahrzeugtyps entweder manuell eingegeben werden oder diese Daten aus einer Datenbank ausgelesen werden, die eine Vielzahl von Fahrzeugtypen beinhaltet, sodass die aktuelle zeitabhängige Lage und damit die Bewegung eines oder mehrerer Fahrzeuge (1,17) im Koordinatensystem (22) der Umgebung oder zumindest im Koordinatensystem (20) des Fahrzeugs (1) errechnet wird und somit eine virtuelle Darstellung eines Unfallhergangs oder einer kritischen Verkehrssituation aus allen denkbaren Perspektiven errechnet wird und in einem auf die Unfall- bzw. Ereignis-relevanten Objekte reduzierten virtuellen 3D-Film dargestellt wird.

4. Verfahren nach einem der vorangehenden Ansprüche, ***dadurch gekennzeichnet,* dass** die Berechnung der aktuellen zeitabhängigen Lage der Referenzpunkte (1,8,19,23,24,25) sowie der Erfassungskameras (2,3) im Koordinatensystem (22) der Umgebung und/oder im Koordinatensystem (20) des Fahrzeugs (1) und der damit verknüpften Lage der Fahrzeuge in einem mit entsprechenden Rechenformeln programmierbaren Rechner halbautomatisch oder automatisch erfolgt, wobei die Bewegungsdaten mindestens des ausgerüsteten Fahrzeugs (1) und optional von mindestens einem weiteren Fahrzeug (17) errechnet werden, nämlich die Position, die Fahrtrichtung und allfällige Richtungsänderungen, sowie die Geschwindigkeit als zeitliche Änderung der Position und allfällige Geschwindigkeitsänderungen, das heisst eine Beschleunigung und/oder ein Bremsvorgang, sowie auch die Orientierung und ihre zeitlichen Änderungen.

5. Verfahren nach einem der vorangehenden Ansprüche, ***dadurch gekennzeichnet,* dass** der berechneten Lage und Bewegung eines oder mehrerer Fahrzeuge mit Hilfe von zuvor oder nachträglich aufgenommenen, kalibrierten und damit triangulierbaren Bildern der Umgebung, sowie den diesen Umgebungsbildern und gleichzeitig dem Umgebungs-Koordinatensystem (22) zuordnenbaren Erkennungspunkten (23,24) ein dem momentanen Zeitpunkt und der berechneten Zuschauerperspektive entsprechendes Umgebungsbild errechnet und hinterlegt wird.

6. Einrichtung zur Aufzeichnung von Fahr- und/oder Verkehrssituationen von Fahrzeugen nach einem der Verfahrensansprüche 1 bis 5, bestehend aus zwei mit Abstand (15) voneinander angeordneten Erfassungskameras (2,3), deren jeweilige Erfassungsbereiche (11,12) sich in einem gemeinsamen Schnittbereich (13) überlagern, ***dadurch gekennzeichnet,* dass** die Erfassungskameras (2,3) mit einer Zeitsteuerung verbunden sind, sodass die Bildaufnahme zeitlich synchronisierbar ist und die Anordnung der Erfassungskameras (2,3) in einem Koordinatensystem (20) eines Fahrzeuges (1) kalibriert ist, sodass photogrammetrisch in Bezug auf die Lage kalibrierte Bilder aufnehmbar sind, das heisst mindestens ein künstlich angebrachter oder natürlich vorhandener Referenzpunkt der Umgebung (23,24,25) oder mindestens ein Erkennungspunkt (18,19) mindestens eines zweiten Fahrzeugs (17) ohne weitere Massnahmen photogrammetrisch triangulierbar ist, das heisst in seiner zeitabhängigen Lage erfassbar ist, sodass aus der zeitgesteuerten, synchronisierten Bildaufzeichnung die aktuelle, zeitabhängige Lage der Referenzpunkte der Umgebung (23,24,25) oder der Erkennungspunkte (18,19) im Koordinatensystem (20) des ausgerüsteten Fahrzeugs (1) und zudem unter Berücksichtigung von deren Lage im Koordinatensystem (21) des zweiten Fahrzeuges (17) und der absoluten Lage der Erfassungskamera (2,3) im Koordinatensystem (20) die zeitabhängige Lage und Bewegung des ausgerüsteten Fahrzeugs (1) im Koordinatensystem (22) der Umgebung oder die Lage mindestens eines zweiten Fahrzeugs (17) entweder im Koordinatensystem (22) der Umgebung oder zumindest im Koordinatensystem (20) des ausgerüsteten Fahrzeugs (1) bestimmbar ist.

7. Einrichtung zur Aufzeichnung von Fahr- und/oder Verkehrssituationen von Fahrzeugen nach einem der Verfahrensansprüche 1 bis 5, bestehend aus zwei mit Abstand (15) voneinander angeordneten Erfassungskameras (2,3), deren jeweilige Erfassungsbereiche (11,12) sich in einem gemeinsamen Schnittbereich (13) überlagern, ***dadurch gekennzeichnet,* dass** die Erfassungskameras (2,3) mit einer Zeitsteuerung verbunden sind, sodass die Bildaufnahme zeitlich synchronisierbar ist und die Anordnung der Erfassungskameras (2,3) in einem Koordinatensystem (20) eines Fahrzeuges (1) kalibriert ist, sodass photogrammetrisch in Bezug auf die Lage kalibrierte Bilder aufnehmbar sind, das heisst mindestens ein künstlich angebrachter oder natürlich vorhandener Referenzpunkt der Umgebung (23,24,25) und mindestens ein Erkennungspunkt (18,19) mindestens eines zweiten Fahrzeugs (17) ohne weitere Massnahmen photogrammetrisch triangulierbar ist, das heisst in seiner zeitabhängigen Lage erfassbar ist, sodass aus der zeitgesteuerten, synchronisierten Bildaufzeichnung die aktuelle, zeitabhängige Lage der Referenzpunkte der Umgebung (23,24,25) und der Erkennungspunkte (18,19) im Koordinatensystem (20) des ausgerüsteten Fahrzeugs (1) und zudem unter Berücksichtigung von deren Lage im Koordinatensystem (21) des zweiten Fahrzeuges (17) und der absoluten Lage der Erfassungskamera (2,3) im Koordinatensystem (20) die zeitabhängige Lage und Bewegung des ausgerüsteten Fahrzeugs (1) im Koordinatensystem (22) der Umgebung und die Lage mindestens eines zweiten Fahrzeugs (17) entweder im Koordinatensystem (22) der Umgebung oder zumindest im Koordinatensystem (20) des ausgerüsteten Fahrzeugs (1) bestimmbar ist.

8. Einrichtung nach einem der Ansprüche 6 oder 7, ***dadurch gekennzeichnet,* dass** sie mindestens einen mit den Erfassungskameras (2,3) gekoppelten Speicher (6,7) zur seriellen Speicherung einer Bildfolge aufweist, und mindestens einen weiteren, nichtflüchtigen Speicher (8,9) zur Speicherung der Kamera-Anordnung im Koordinatensystem (20) des ausgerüsteten Fahrzeugs (1).

9. Einrichtung nach einem der Ansprüche 6 bis 8, ***dadurch gekennzeichnet,* dass** die Erfassungskameras (2,3) mit einer Zeitmessvorrichtung, z.B. mit einer Funkuhr verbunden sind, mit dem Zweck, die absolute Zeit der jeweiligen Bildaufnahme bestimmbar zu machen.

10. Einrichtung nach einem der Ansprüche 6 bis 9, ***dadurch gekennzeichnet,* dass** mindestens eine Tonaufnahmevorrichtung, z.B. ein Mikrofon (4, 5) vorhanden ist.

11. Einrichtung nach einem der Ansprüche 6 bis 10, ***dadurch gekennzeichnet,* dass** sie einen Sensor zum automatischen Auslösen oder zum Festhalten einer Datenspeicherung, oder eine Betätigungsvorrichtung, z.B. eine Taste am Lenkrad, zum manuellen Auslösen oder zum Festhalten einer Datenspeicherung einschliesst.

12. Einrichtung nach einem der Ansprüche 6 bis 11, ***dadurch gekennzeichnet,* dass** zur Unterstützung des Verfahrens künstlich angebrachte Referenzpunkte (18,19,23,24,25) an einem Fahrzeug (1,17) und/oder im Bereich von Verkehrswegen angeordnet sind, wobei diese künstlichen Referenzpunkte (18,19,23,24,25) zum Zweck einer verbesserten automatischen Erkennung in Form und/oder Farbe kodiert und/oder passiv oder aktiv leuchtend ausgebildet sein können.

## Claims

1. A method for evaluating travel and/or traffic situations with at least two detection cameras (2,3) arranged at a distance to one another on a vehicle (1), whose respective detection regions (11,12) overlap in a common overlapping region (13), ***characterised in that*** with common time control a temporally synchronized and with spatially calibrated detection cameras (2,3) in a coordinate system (20) of a vehicle (1), a photogrammetric, position-calibrated picture recording is being made, and thereby at least one artificially attached or naturally present reference point of the surroundings (23,24,25) or of at least one reference point (18,19) of at least a second vehicle (17) is photogrammetrically triangulated, that is detected in its actual, time-depending spatial position, and afterwards under consideration of the location, that is of the position and orientation of the recording cameras (2,3) in the coordinate system (20) of vehicle (1) or the position of the reference points (18,19) in the coordinate system (21) of the at least one second vehicle (17) the temporal and spatial location and position of the equipped vehicle (1) in the coordinate system (22) of the surroundings or the location and position of the at least one second vehicle (17) either in the coordinate system (22) of the surroundings or at least in the coordinate system (20) of the first vehicle (1) is determined.

2. A method for evaluating travel and/or traffic situations with at least two detection cameras (2,3) arranged at a distance to one another on a vehicle (1), whose respective detection regions (11,12) overlap in a common overlapping region (13), **characterised in that** with common time control a temporally synchronized and with spatially calibrated detection cameras (2,3) in a coordinate system (20) of a vehicle (1), a photogrammetric, position-calibrated picture recording is being made, and thereby at least one artificially attached or naturally present reference point of the surroundings (23,24,25) and of at least one reference point (18,19) of at least a second vehicle (17) is photogrammetrically triangulated, that is detected in its actual, time-depending spatial position, and afterwards under consideration of the location, that is of the position and orientation of the recording cameras (2,3) in the coordinate system (20) of vehicle (1) or the position of the reference points (18,19) in the coordinate system (21) of the at least one second vehicle (17) the temporal and spatial location and position of the equipped vehicle (1) in the coordinate system (22) of the surroundings and the location and position of the at least one second vehicle (17) either in the coordinate system (22) of the surroundings or at least in the coordinate system (20) of the first vehicle (1) is determined.

3. A method according to one of the preceding claims, **characterised in that** under consideration of the position of the recording cameras (2,3) in the coordinate system (20) and/or under consideration of the position of at least of an artificial or natural reference point (18,19) in the coordinate system (21) the datas of the respective type of vehicle are entered either manually or these datas are being taken from a database which contains a multitude of vehicle types, so that the actual, time-dependent position and therefore also the movement of one or more vehicles (1,17) in the coordinate system (22) of the surroundings or at least in the coordinate system (21) of the vehicle (1) is being calculated and therefore a virtual display of the course of the accident or of a critical traffic situation is calculated from all thinkable perspectives and displayed in a 3D-film which is reduced to the objects relevant for the accident or event.

4. A method according to one of the preceding claims, **characterised in that** the calculation of the actual time-dependent position of the reference points (18,19,23,24,25) as well as of the recording cameras (2,3) in the coordinate system (22) of the surrounding and/or the coordinate system (20) of the vehicle (1) and the position of the tied-up vehicles is effected semi-automatically or automatically in a computer, programmable with suitable computation formulae, wherein the movements datas of at least the equipped vehicle (1) and optionally of at least one further vehicle (17) are computed, namely the position, the travel direction and any direction changes, as well as the speed as temporal change of the position and any speed changes, i.e. an acceleration and/or a braking procedure as well as the orientation and its temporal changes.

5. A method according to one of the preceding claims, **characterised in that** with the calculated position and movements of one ore more vehicles with the aid of the before or subsequently recorded calibrated and therefore triangulable pictures of the surroundings as well as with the reference points (23,24) which are assignable to the pictures of the surroundings and contemporarily to the surroundings coordinate system (22), a picture of the surrounding is calculated and superimposed which pertains to the momentary point of time and the calculated perspective of the viewer.

6. An installation for recording travel and/or traffic situations of vehicles according to one or more of the method claims 1 to 5, consisting of two detection cameras (2,3) arranged at a distance (15) to one another, whose respective detection regions (11,12) overlap in a common overlapping region (13), **characterised in that** the detection cameras (2,3) are connected with a time control, so that the picture recording is temporally synchronisable and their spatial location and position in the coordinate system (20) of a vehicle (1) is calibrated, so that photogrammetrically in relation to the position, calibrated pictures are recordable, that is at least one artificially set or a natural reference point in the surroundings (23,24,25) or of at least a reference point (18,19) of at least one second vehicle (17) is photogrammetrically triangulable without any additional measures, which means it is recordable in its time-dependent position, so that based on the time controlled, synchronized picture recording the actual, time-depending position of the reference points of the surroundings (23,24,25) or the reference points (18,19) in the coordinate system (20) of the equipped vehicle (1) and in addition in consideration of their position in the coordinate system (21) and the absolute position of the recording cameras (2,3) in the coordinate system (20), the time-dependent position (20) and the movements of the equipped vehicle (1) in the coordinate system (22) of the surroundings or the position (21) of at least one second vehicle (17) either in the coordinate system (22) of the surroundings or at least in the coordinate system (20) of the equipped vehicle is determinable.

7. An installation for recording travel and/or traffic situations of vehicles according to one or more of the method claims 1 to 5, consisting of two detection cameras (2,3) arranged at a distance (15) to one another, whose respective detection regions (11,12) overlap in a common overlapping region (13), **characterised in that** the detection cameras (2,3) are connected with a time control, so that the picture recording is temporally synchronisable and their spatial location and position in the coordinate system (20) of a vehicle (1) is calibrated, so that photogrammetrically in relation to the position, calibrated pictures are recordable, that is at least one artificially set or a natural reference point in the surroundings (23,24,25) and of at least a reference point (18,19) of at least one second vehicle (17) is photogrammetrically triangulable without any additional measures, which means it is recordable in its time-dependent position, so that based on the time controlled, synchronized picture recording the actual, time-depending position of the reference points of the surroundings (23,24,25) and the reference points (18,19) in the coordinate system (20) of the equipped vehicle (1) and in addition in consideration of their position in the coordinate system (21) and the absolute position of the recording cameras (2,3) in the coordinate system (20), the time-dependent position (20) and the movements of the equipped vehicle (1) in the coordinate system (22) of the surroundings and the position (21) of at least one second vehicle (17) either in the coordinate system (22) of the surroundings or at least in the coordinate system (20) of the equipped vehicle is determinable.

8. An installation according to one of the claims 6 or 7, **characterised in that** it comprises at least one memory (6,7) coupled to the detection cameras (2,3) for the serial storage of a picture sequence, for example in the form of a circular buffer, and at least one further, non-volatile memory (8, 9) for storing the photogrammetric calibration data and/or the of the spatial camera arrangement in the coordinate system (20) of the equipped vehicle (1).

9. An installation according to one of the claims 6 to 8, **characterised in that** the detection cameras (2,3) are connected to a time measurement device, e.g. to radio clock, with the purpose of rendering the absolute time of the respective picture recording determinable.

10. An installation according to one of the claims 6 to 9, **characterised in that** at least one sound recording device, e.g. a microphone (4,5) is present, for the picture-synchronous recording of noises.

11. An installation according to one of the claims 6 to 10, **characterised in that** it includes a sensor for the automatic activation or securing of a data storage, or an activation device, e.g. a button on the steering wheel, for the manual activation or for securing data storage.

12. An installation according to one of the claims 6 to 11, **characterised in that** for supporting the method, artificially attached reference points (18, 19, 23, 24, 25) are arranged on a vehicle (1, 17) and/or in the region of traffic routes, wherein these artificial reference points (18, 19, 23, 24, 25) for the purpose of an improved automatic recognition are coded in shape and/or colour and/or are designed illuminating in a passive or active manner.

## Revendications

1. Procédé pour évaluer des situations de déplacement et/ou de trafic routier comprenant au moins deux caméras de saisie (2, 3) disposées à une certaine distance (15) l'une de l'autre sur un véhicule automobile (1) dont les régions de détection respectives (11, 12) se chevauchent dans une région de chevauchement commune (13), ***caractérisé en ce que**,* avec une commande de temps commune, un enregistrement calibré d'images et synchronisé en temps a lieu par photogrammétrie en référence à la position et avec une disposition calibrée dans l'espace des caméras de saisie (2, 3) dans un système de coordonnées (20) d'un véhicule automobile (1), et de cette manière au moins un point de référence mis en place artificiellement ou présent naturellement de l'environnement (23, 24, 25) ou d'au moins un point de reconnaissance (18, 19) d'au moins un second véhicule automobile (17) est triangulé par photogrammétrie, cela signifie qu'il est détecté dans sa position spatiale actuelle en fonction du temps et après quoi, sous la prise en considération de la position, c'est-à-dire de la position et de l'orientation des caméras de saisie (2, 3) dans le système de coordonnées (20) du véhicule automobile (1) ou de la position des points de reconnaissance (18, 19) dans le système de coordonnées (21) du au moins un second véhicule automobile (17), l'emplacement et la position en fonction du temps et dans l'espace du véhicule automobile équipé (1) dans le système de coordonnées (22) de l'environnement ou l'emplacement et la position du au moins un second véhicule automobile (17) sont déterminés, soit dans le système de coordonnées (22) de l'environnement, soit au moins dans le système de coordonnées (20) du premier véhicule automobile (1).

2. Procédé pour évaluer des situations de déplacement et/ou de trafic routier comprenant au moins deux caméras de saisie (2, 3) disposées à une certaine distance (15) l'une de l'autre sur un véhicule automobile (1), dont les régions de détection respectives (11, 12) se chevauchent dans une région de chevauchement commune (13), ***caractérisé en ce que**,* avec une commande de temps commune, un enregistrement calibré d'images et synchronisé en temps a lieu par photogrammétrie en référence à la position et avec une disposition calibrée dans l'espace des caméras de saisie (2, 3) dans un système de coordonnées (20) d'un véhicule automobile (1), et de cette manière au moins un point de référence mis en place artificiellement ou présent naturellement de l'environnement (23, 24, 25) ou d'au moins un point de reconnaissance (18, 19) d'au moins un second véhicule automobile (17) est triangulé par photogrammétrie, cela signifie qu'il est détecté dans sa position spatiale actuelle en fonction du temps et après quoi, sous la prise en considération de la position, c'est-à-dire de la position et de l'orientation des caméras de saisie (2, 3) dans le système de coordonnées (20) du véhicule automobile (1) et de la position des points de reconnaissance (18, 19) dans le système de coordonnées (21) du au moins un second véhicule automobile (17), l'emplacement et la position dans le temps et dans l'espace du véhicule automobile équipé (1) dans le système de coordonnées (22) de l'environnement ou l'emplacement et la position du au moins un second véhicule automobile (17) sont déterminés, soit dans le système de coordonnées (22) de l'environnement, soit au moins dans le système de coordonnées (20) du premier véhicule automobile (1).

3. Procédé selon l'une des revendications précédentes, ***caractérisé en ce que**,* sous la prise en considération de la position des caméras de saisie (2, 3) dans le système de coordonnées (20) et/ou sous la prise en considération de la position d'au moins un point de reconnaissance artificiel ou naturel (18, 19) dans le système de coordonnées (21), les données du type respectif de véhicule automobile sont entrées soit manuellement ou ces données sont prélevées par lecture depuis une base de données qui contient une multitude de types de véhicules automobiles, de telle sorte que la position actuelle et dépendante du temps et par conséquent aussi le déplacement d'un véhicule automobile ou de plusieurs véhicules automobiles (1, 17) dans le système de coordonnées (22) de l'environnement ou au moins dans le système de coordonnées (21) du véhicule automobile (1) est calculé et par conséquent une représentation virtuelle d'un événement de l'accident ou une situation critique de trafic routier est calculée depuis toutes les perspectives imaginables et est représentée dans un film virtuel en 3D qui est réduit aux objets décisifs pour l'accident ou l'événement.

4. Procédé selon l'une des revendications précédentes, ***caractérisé en ce que*** le calcul de la position actuelle en fonction du temps des points de référence (18, 19, 23, 24, 25) ainsi que celle des caméras de saisie (2, 3) dans le système de coordonnées (22) de l'environnement et/ou dans le système de coordonnées (20) du véhicule automobile (1) et la position qui y est associée des véhicules automobiles est effectuée dans un ordinateur programmable avec des formules de calcul correspondantes de manière semi-automatique ou automatique, dans lequel les données de déplacement au moins du véhicule automobile équipé (1) et en option au moins d'un autre véhicule automobile (17) sont calculées, à savoir la position, la direction de déplacement et des modifications éventuelles de la direction, ainsi que la vitesse comme modification temporelle de la position et des modifications éventuelles de la vitesse, c'est-à-dire une accélération et/ou une procédure de freinage ainsi que l'orientation et ses modifications temporelles.

5. Procédé selon l'une des revendications précédentes, ***caractérisé en ce que**,* avec le calcul de la position et des déplacements d'un ou de plusieurs véhicules automobiles à l'aide d'images enregistrées au préalable ou par la suite, calibrées et ainsi triangulables de l'environnement ainsi que des points de reconnaissance (23, 24) qui peuvent être attribués à ces images de l'environnement et en même temps au système de coordonnées (22) de l'environnement, une image de l'environnement qui correspond au moment actuel et à la perspective calculée de l'observateur est calculée et mémorisée.

6. Dispositif pour l'enregistrement des situations de déplacement et/ou de trafic routier des véhicules automobiles selon l'une ou plus des revendications du procédé 1 à 5, constitué de deux caméras de saisie (2, 3) disposées à une certaine distance (15) l'une de l'autre, dont les régions de détection respectives (11, 12) se chevauchent dans une région de chevauchement commune (13), ***caractérisé en ce que*** les caméras de saisie (2, 3) sont connectées à une commande de temps, de telle sorte que l'enregistrement des images peut être synchronisé temporellement et que leur emplacement dans l'espace et leur position dans le système de coordonnées (20) d'un véhicule automobile (1) est calibré, de telle sorte que des images calibrées peuvent être enregistrées par photogrammétrie en référence à la position, cela signifie qu'au moins un point de référence mis en place artificiellement ou naturellement dans l'environnement (23, 24, 25) ou au moins un point de reconnaissance (18, 19) d'au moins un second véhicule automobile (17) est triangulable par photogrammétrie sans aucune mesure supplémentaire, ce qui signifie qu'il peut être enregistré dans sa position dépendante du temps de telle sorte que, sur la base de l'enregistrement d'images commandé en temps et synchronisé, la position dépendante du temps des points de référence de l'environnement (23, 24, 25) ou des points de reconnaissance (18, 19) dans le système de coordonnées (20) du véhicule automobile équipé (1) et de plus sous la prise en considération de leurs positions dans le système de coordonnées (21) du second véhicule automobile (17) et de la position absolue des caméras de saisie (2, 3) dans le système de coordonnées (20), la position dépendante du temps et le déplacement du véhicule automobile équipé (1) dans le système de coordonnées (22) de l'environnement ou la position du au moins un second véhicule automobile (17) peut être déterminée soit dans le système de coordonnées (22) de l'environnement, soit au moins dans le système de coordonnées (20) du véhicule automobile équipé.

7. Dispositif pour l'enregistrement des situations de déplacement et/ou de trafic routier des véhicules automobiles selon l'une ou plus des revendications du procédé 1 à 5, constitué de deux caméras de saisie (2, 3) disposées à une certaine distance (15) l'une de l'autre, dont les régions de détection respectives (11, 12) se chevauchent dans une région de chevauchement commune (13), ***caractérisé en ce que*** les caméras de saisie (2, 3) sont connectées à une commande de temps, de telle sorte que l'enregistrement des images peut être synchronisé temporellement et que la position des caméras de saisie (2, 3) dans l'espace et leur emplacement dans un système de coordonnées (20) d'un véhicule automobile (1) est calibré, de telle sorte que des images calibrées peuvent être enregistrées par photogrammétrie en référence à la position, cela signifie qu'au moins un point de référence mis en place artificiellement ou naturellement dans l'environnement (23, 24, 25) et qu'au moins un point de reconnaissance (18, 19) d'au moins un second véhicule automobile (17) est triangulable par photogrammétrie sans aucune mesure supplémentaire, ce qui signifie qu'il peut être saisi dans sa position dépendante du temps de telle sorte que, sur la base de l'enregistrement d'images commandé en temps et synchronisé, la position actuelle et dépendante du temps des points de référence de l'environnement (23, 24, 25) et des points de reconnaissance (18, 19) dans le système de coordonnées (20) du véhicule automobile équipé (1) et, de plus, sous la prise en considération de leurs positions dans le système de coordonnées (21) du second véhicule automobile (17) et de la position absolue des caméras de saisie (2, 3) dans le système de coordonnées (20), la position dépendante du temps et le déplacement du véhicule automobile équipé (1) dans le système de coordonnées (22) de l'environnement ou la position du au moins un second véhicule automobile (17) peut être déterminée, soit dans le système de coordonnées (22) de l'environnement, soit au moins dans le système de coordonnées (20) du véhicule automobile équipé.

8. Dispositif selon l'une ou l'autre des revendications 6 et 7, ***caractérisé en ce qu'**il* présente au moins une mémoire (6, 7) accouplée aux caméras de saisie (2, 3) pour la mémorisation sérielle d'une séquence d'images, par exemple sous la forme d'un tampon circulaire, et au moins une autre mémoire non volatile (8, 9) pour la mémorisation des données de calibrage par photogrammétrie et/ou des données de la disposition des caméras dans l'espace dans le système de coordonnées (20) du véhicule automobile équipé (1).

9. Dispositif selon l'une des revendications 6 à 8, ***caractérisé en ce que*** les caméras de saisie (2, 3) sont connectées à un dispositif de mesure du temps, par exemple une horloge radio, dans le but de rendre déterminable le temps absolu de l'enregistrement respectif des images.

10. Dispositif selon l'une des revendications 6 à 9, ***caractérisé en ce qu'**au* moins un dispositif d'enregistrement du son, par exemple un microphone (4, 5) est présent, pour l'enregistrement synchrone des images et des bruits.

11. Dispositif selon l'une des revendications 6 à 10, ***caractérisé en ce qu'**il* inclut un capteur pour le déclenchement automatique ou pour la sécurisation d'une mémorisation des données ou un mécanisme d'actionnement, par exemple un bouton sur le volant de direction, pour le déclenchement manuel ou pour la sécurisation de la mémorisation des données.

12. Dispositif selon l'une des revendications 6 à 11, ***caractérisé en ce que**,* pour assister le procédé, des points de référence mis en place artificiellement (18, 19, 23, 24, 25) sont agencés sur un véhicule automobile (1, 17) et/ou dans la région des routes du trafic routier, dans lequel ces points de référence artificiels (18, 19, 23, 24, 25) pour le but d'une reconnaissance automatique améliorée peuvent être codés dans leur forme et/ou dans leur couleur et/ou peuvent être réalisés avec une illumination passive ou active.
